# EUROPÄISCHE PATENTSCHRIFT

(11) **EP 2 200 378 B1**
(45) Veröffentlichungstag und Bekanntmachung des Hinweises auf die Patenterteilung: **17.08.2016**
(21) Anmeldenummer: 09179863.7
(22) Anmeldetag: 18.12.2009
(51) Int. Cl.: H04L 29/06, H04M 7/00, H04W 24/00, H04W 84/12, H04W 84/18, H04W 88/06

(54) **Telekommunikationsnetzwerkknoten und Verfahren zu dessen Betrieb**
Telecommunication network node and method for its operation
Noeuds de réseau de télécommunication et leur procédé de fonctionnement

(30) Priorität: 18.12.2008 DE 102008062770
(43) Veröffentlichungstag der Anmeldung: 23.06.2010
(73) Patentinhaber: Gigaset Communications GmbH, 40549 Düsseldorf (DE)
(72) Erfinder: Schulenberg, Christian, 46459, Rees (DE)
(74) Vertreter: Michalski Hüttermann & Partner Patentanwälte mbB

(56) Entgegenhaltungen:
- US-A1- 2006 019 723
- US-A1- 2006 116 178
- leo22 IPPF-Fünfhundert-Club: "[Übersicht] Neue Funktionen in Firmware XX.04.06 bis 49 für FRITZ!Box(en) Fon" IP-Phone-Forum 11. Juli 2007 (2007-07-11), XP002577750 Gefunden im Internet: URL:http://www.ip-phone-forum.de/showthrea d.php?t=142309> [gefunden am 2010-04-14]
- AVM GmbH - Verena Dietrich: "INSTALLATION, KONFIGURATION UND BEDIENUNG DER FRITZ!BOX FON WLAN 7170" November 2005 (2005-11), XP002577751 Gefunden im Internet: URL:http://www.kdr2.de/Daten/FBFPLUS/handb uch_fritzbox_fon_wlan_plus.pdf> [gefunden am 2010-04-14]
- AVM GmbH: "Wie Ihre FRITZ!Box nachts automatisch WLAN abschaltet" 15. Juni 2008 (2008-06-15), XP002577752 Gefunden im Internet: URL:http://web.archive.org/web/20080615222 348/http://www.avm.de/de/News/artikel/news letter/nachtschaltung.html> [gefunden am 2010-04-14]

## Beschreibung

Die Erfindung betrifft einen Telekommunikationsnetzwerkknoten, welcher wenigstens zwei Kommunikationseinrichtungen und eine Schalteinrichtung enthält, welche dazu eingerichtet ist, wenigstens eine Kommunikationseinrichtung wenigstens zeitweise abzuschalten. Weiterhin betrifft die Erfindung ein Verfahren zum Betrieb eines Telekommunikationsnetzwerkknotens, welcher wenigstens zwei Kommunikationseinrichtungen enthält, bei welchem wenigstens eine unbenutzte Kommunikationseinrichtung wenigstens zeitweise abgeschaltet wird.

Telekommunikationsnetzwerkknoten der eingangs genannten Art werden insbesondere in kleinen Büros und von Heimanwendern als multifunktionale Kommunikationseinrichtung verwendet. Beispielsweise können Telekommunikationsnetzwerkknoten der eingangs genannten Art die Funktion eines DSL-Modems und eines LAN-Netzwerkswitches in einem einzigen Gehäuse vereinen. Fallweise können weitere Funktionen hinzutreten, beispielsweise die Funktion eines WLAN-Access-Points oder die Funktionen einer analogen oder digitalen Telefonanlage für kabelgebundene oder schnurlose Telefone und/oder Faxgeräte.

Mit zunehmendem Funktionsumfang der Telekommunikationsnetzwerkknoten steigt dabei auch deren Energiebedarf. Da solche Geräte oftmals 24 Stunden am Tag und sieben Tage die Woche eingeschaltet sein müssen, beispielsweise, um die telefonische Erreichbarkeit des Haushalts oder des Büros zu gewährleisten, bewirkt dabei auch eine geringe Steigerung der Leistungsaufnahme einen nennenswerten Energieverbrauch.

Unter der Internet-URL: http://www.ip-phone-forum.de/showthread.php?t=142309 findet sich ein Beitrag des Nutzers leo22 IPPF-Fünfhundert-Club: "[Übersicht] Neue Funktionen in Firmware XX.04.06 bis 49 für FRITZ! Box(en) Fon"IP-Phone-Forum 11. Juli 2007 (2007-07-11), in welchem die Funktionalitäten einer Telefonanlage zur Telefonie über das Interne be-schrieben werden. Einzelne Kommunikationseinrichtungen der beschriebenen Telefonanlage sind danach manuell abschaltbar.

Der Erfindung liegt daher die Aufgabe zugrunde, trotz steigenden Funktionsumfangs der Telekommunikationsnetzwerkknoten den Verbrauch an elektrischer Energie automatisch konstant zu halten oder sogar zu senken.

Die Aufgabe wird erfindungsgemäß gelöst durch ein Telekommunikationsnetzwerkknoten, welcher folgende Elemente enthält:
- wenigstens zwei Kommunikationseinrichtungen (110),
- eine Einrichtung zur Aktivitätsanalyse (EEA), der wenigstens zwei Kommunikationseinrichtungen (110) zugeordnet sind,
- einen Auswahlspeicher (120) zur Speicherung von Aktivitätsdaten (160) der wenigstens zwei Kommunikationseinrichtungen (110), und
- eine Schalteinrichtung (180), welche dazu eingerichtet ist, wenigstens eine Kommunikationseinrichtung (110) wenigstens zeitweise abzuschalten,
dadurch gekenntzeichnet, dass die Einrichtung zur Aktivitätsanalyse (EEA) mit dem Auswahlspeicher (120) derart verbunden ist, dass Aktivitätsdaten (160) der wenigstens zwei Kommunikationseinrichtungen (110) in dem Auswahlspeicher (120) ablegbar sind und die Schalteinrichtung (180) mit dem Auswahlspeicher (120) verbunden ist, wobei die Schalteinrichtung dazu eingerichtet ist, wenigstens eine Kommunikationseinrichtung (110) gemäß im Auswahlspeicher abgelegter Aktivitätsdaten, (160) automatisiert zu schalten.

Weiterhin besteht die Lösung der Aufgabe in einem Verfahren zum Betrieb eines Telekommunikationsnetzwerkknotens (100), welcher wenigstens zwei Kommunikationseinrichtungen (110) enthält, ausgewählt aus einem DSL-Modem (xDSL), einem analogen Modem, einer drahtlosen Netzwerkschnittstelle (WLAN), einer kabelgebundenen Netzwerkschnittstelle (LAN), einem internen Telefonanschluss (FXS), einem externen Telefonanschluss (FXO), einer DECT-Schnittstelle (DECT), einer USB-Schnittstelle (USB) und/oder einer drahtlosen Nahbereichs-Funkschnittstelle (Bluetooth), bei. welchem in einem ersten Schritt automatisiert eine Aktivitätsanalyse der wenigstens zwei Kommunikationseinrichtungen (110) durchgeführt wird und die Aktivitätsdaten (160) für jede Kommunikationseinrichtung (110) in einem Auswahlspeicher (120) abgelegt werden und in einem zweiten Schritt wenigstens eine Kommunikationseinrichtung (110) in Abhängigkeit der in dem Auswahlspeicher (120) abgelegten Aktivitätsdaten (160) wenigstens zeitweise abgeschaltet wird.

Erfindungsgemäß wurde erkannt, dass gerade Telekommunikationsnetzwerkknoten mit einer Vielzahl möglicher Funktionen von den meisten Anwendern nicht vollständig genutzt werden. In diesem Fall kann elektrische Energie eingespart werden, indem nicht genutzte Komponenten des Telekommunikationsnetzwerkknotens abgeschaltet werden. Da eine Vielzahl von Benutzern die Möglichkeiten, welche ihr Telekommunikationsnetzwerkknoten bietet, nicht kennen, wird erfindungsgemäß vorgeschlagen, die einzelnen Komponenten des Telekommunikationsnetzwerkknotens automatisiert zu überwachen und auf diese Weise eine Aktivitätsanalyse durchzuführen. Das individuelle Nutzerverhalten kann so über eine vorgebbare Zeitspanne erfasst und dann in ein individuelles Schaltprogramm überführt werden, mit welchem nicht benötigte Komponenten wenigstens für bestimmte Zeiten vom Stromnetz getrennt werden. Beispielsweise können bestimmte Komponenten zu bestimmten Tageszeiten und/oder an bestimmten Wochentagen deaktiviert werden.

Die genannten Kommunikationseinrichtungen des Telekommunikationsnetzwerkknotens sind dabei lediglich beispielhaft zu verstehen. Insbesondere der technische Fortschritt kann neue, bisher unbekannte Kommunikationseinrichtungen hervorbringen, welche ebenfalls in den an sich bekannten Telekommunikationsnetzwerkknoten integriert werden können. Der Fachmann wird selbstverständlich erkennen, dass auch solche neuen Kommunikationseinrichtungen mit dem erfindungsgemäß vorgeschlagenen Verfahren und der erfindungsgemäßen Vorrichtung zu bestimmten Zeiten deaktiviert werden können.

Die erfindungsgemäß verwendete Einrichtung zur Aktivitätsanalyse kann beispielsweise die Signalleitungen einer jeden Kommunikationseinrichtung überwachen und mittels eines Diskriminators erkennen, ob zu einer bestimmten Zeit ein Signal am jeweiligen Anschluss anliegt oder nicht. Alternativ oder kumulativ könnte auch die elektrische Primärenergieaufnahme überwacht werden, so dass eine in Benutzung befindliche Kommunikationseinrichtung durch ihren erhöhten Energiebedarf erkannt wird. Diese dargestellten Möglichkeiten zur Realisierung einer Einrichtung zur Aktivitätsanalyse sind jedoch lediglich beispielhaft zu verstehen. Der Fachmann wird fallweise weitere Möglichkeiten in Betracht ziehen.

Damit die gesammelten Aktivitätsdaten zur Erstellung eines Benutzerprofils zur Verfügung stehen, werden diese in einem Auswahlspeicher abgelegt. Bevorzugt handelt es sich dabei um einen nicht-flüchtigen Speicher, beispielsweise ein EEPROM oder einen Flash-Speicher. In anderen Ausführungsformen der Erfindung können auch flüchtige Speicher wie DRAM oder SRAM verwendet werden. Der Speicher kann beispielsweise in Form einer Datenbank organisiert werden, aus welcher die gesammelten Daten zur Benutzung der unterschiedlichen Kommunikationseinrichtung von weiteren Komponenten des Telekommunikationsnetzwerkknotens abgerufen werden können.

Die vorgeschlagene Schalteinrichtung unterbricht dann wenigstens zeitweise die Stromversorgung zu denjenigen Kommunikationseinrichtungen, welche unbenutzt sind und daher ohne Funktionseinschränkung deaktiviert werden können. Dies kann in an sich bekannter Weise durch einen Schalter erfolgen, beispielsweise mittels eines elektromechanischen Relais oder einem Feldeffekt- oder Bipolartransistor.

In einer bevorzugten Weiterbildung der Erfindung ist wenigstens ein Datenbus vorgesehen, mit welchem die Kommunikationseinrichtungen und/oder die Schalteinrichtung und/oder die Einrichtung zur Aktivitätsanalyse und/oder der Auswahlspeicher miteinander verbunden sind. Dieser Datenbus kann beispielsweise zur Übertragung der Aktivitäts- bzw. Nutzungsdaten der jeweiligen Kommunikationseinrichtung dienen. Weiterhin kann der wenigstens eine Datenbus zur Übertragung von Kommandos, insbesondere also Auslesebefehlen oder Schaltbefehlen, von der Schalteinrichtung und/oder der Einrichtung zur Aktivitätsanalyse an die Kommunikationseinrichtungen oder umgekehrt dienen. Bevorzugt ist auch der Auswahlspeicher zur Speicherung der Aktivitätsdaten mit dem wenigstens einen Datenbus verbunden, um der Einrichtung zur Aktivitätsanalyse und/oder der Schalteinrichtung Zugriff auf die gespeicherten Daten zu ermöglichen.

In einer Ausführungsform der Erfindung ist eine Einrichtung zur Erzeugung eines Schaltprogramms aus den gespeicherten Aktivitätsdaten vorgesehen, mittels welcher ein Schaltprogramm zur Ansteuerung der Schalteinrichtung aus den gesammelten und im Auswahlspeicher abgelegten Aktivitätsdaten automatisiert ermittelt und über die Schalteinrichtung angewendet werden kann. Auf diese Weise wird der Benutzer nicht mit der Erstellung eines seinem Nutzungsverhalten entsprechenden Schaltprogramms belastet und das Abschalten nicht benötigter Kommunikationseinrichtungen in einem Telekommunikationsnetzwerkknoten ist auch technisch weniger versierten Benutzern möglich, welche die Funktion der Kommunikationseinrichtungen in ihrem Telekommunikationsnetzwerkknoten nicht kennen.

In einer Weiterbildung der Erfindung kann ein automatisiert erstelltes Schaltprogramm und/oder die gesammelten Aktivitätsdaten dem Benutzer mittels einer Benutzerschnittstelle, insbesondere einer graphischen Benutzerschnittstelle, präsentiert werden. Auf diese Weise ist es einem erfahrenen Benutzer möglich, ein automatisiert erstelltes Schaltprogramm weiter an seine persönlichen Bedürfnisse anzupassen und damit ein noch präziseres Schaltverhalten und eine noch größere Energieeinsparung zu erhalten.

In einer Ausführungsform der Erfindung enthält der Telekommunikationsnetzwerkknoten weiterhin eine Einrichtung zur Zeiterfassung, mit welcher die Einrichtung zur Aktivitätsanalyse und/oder die Schalteinrichtung steuerbar ist. Um eine besonders präzise Erfassung der Nutzeraktivitäten und ein präzise darauf abgestimmtes Schaltverhalten zu ermöglichen, wird in einer Weiterbildung der Erfindung vorgeschlagen, eine präzise Zeiterfassung durch eine Verbindung zu einem externen Zeitgeber einzurichten. Dies kann beispielsweise ein Zeitgeber in einem Computer-Netzwerk sein, wie beispielsweise ein NTP-Server. Weiterhin können präzise Zeitsignale über eine Funkschnittstelle erfasst werden, beispielsweise über GPS oder DCF77.

Um eine präzise Erfassung des Nutzerverhaltens zu ermöglichen, erfolgt die Erfassung durch die Einrichtung zur Aktivitätsanalyse bevorzugt über einen Zeitraum von einem Tag bis 21 Tagen. Besonders bevorzugt erfolgt die Datenerfassung über etwa sieben Tage. In einer Weiterbildung der Erfindung kann auch vorgesehen sein, nach einer relativ kurzen Erfassungsdauer von etwa einem Tag bis etwa sieben Tagen ein vorläufiges Schaltprogramm zu erzeugen, welches anhand weiterer, fortlaufend gesammelter Aktivitätsdaten weiter verfeinert wird. In einer weiteren Ausführungsform der Erfindung kann vorgesehen sein, dass der Benutzer abgeschaltete Kommunikationseinrichtungen oder nach längerer Benutzungsdauer des Telekommunikationsnetzwerkknotens erstmalig benötigte Kommunikationseinrichtungen durch einen manuellen Benutzereingriff wieder in Betrieb nehmen kann. Bevorzugt erfolgt dann automatisiert eine neue Erfassung des Nutzerverhaltens durch die Einrichtung zur Aktivitätsanalyse. Auf diese Weise kann ein an die neuen Gegebenheiten angepasstes Benutzerprofil erstellt und die Schalteinrichtung entsprechend angesteuert werden.

Besonders variabel kann das erfindungsgemäße Verfahren in einem Telekommunikationsnetzwerkknoten integriert werden, wenn das Verfahren in Form eines Computerprogramms realisiert ist, welches auf einem Mikroprozessor im Telekommunikationsnetzwerkknoten läuft. Ein solches Computerprogramm kann leicht an sich ändernde Gegebenheiten angepasst werden. Um die Ausführung des Computerprogramms in dem Telekommunikationsnetzwerkknoten zu ermöglichen, ist das Computerprogramm auf einen maschinenlesbaren Datenträger in dem Telekommunikationsnetzwerkknoten gespeichert. Als Datenträger eignet sich dabei insbesondere ein EEPROM, ein Flash-Speicher oder eine magnetische Festplatte.

Nachfolgend wird die Erfindung anhand von Figuren und einem Ausführungsbeispiel näher erläutert.
- Fig. 1: zeigt ein Blockschaltbild eines Telekommunikationsnetzwerkknotens gemäß einem Ausführungsbeispiel der Erfindung,
- Fig. 2: zeigt ein Ausführungsbeispiel der Erfindung für Aktivitätsdaten, wie sie mittels der Einrichtung zur Aktivitätsanalyse erfasst werden können.

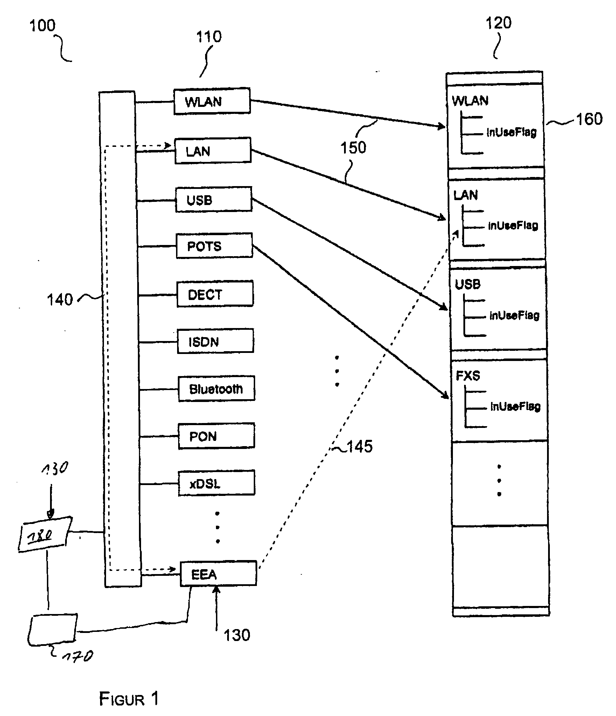

Fig. 1 zeigt schematisch in Form eines Blockschaltbildes den Aufbau eines Telekommunikationsnetzwerkknotens 100 gemäß einem Ausführungsbeispiel der Erfindung. Es ist jedoch darauf hinzuweisen, dass nicht sämtliche Bestandteile des Telekommunikationsnetzwerkknotens 100 in Fig. 1 dargestellt sind. Vielmehr kann der Telekommunikationsnetzwerkknoten 100 weitere Komponenten aufweisen, welche dem Fachmann bekannt sind. Weiterhin müssen in weiteren Ausführungsformen der Erfindung nicht alle dargestellten Komponenten vorhanden sein.

Beispielhaft zeigt Fig. 1 eine Auswahl von Kommunikationseinrichtungen 110. Eine Kommunikationseinrichtung im Sinne der vorliegenden Erfindung ist dabei eine Einrichtung, welche Daten von einem sendenden System empfängt und an ein empfangendes System weitersendet. Dabei können die Daten im Format, also beispielsweise der Codierung, gewandelt werden. Beispielhaft dargestellt ist eine drahtlose Netzwerkschnittstelle WLAN, welche Daten drahtlos an ein Computersystem senden und von diesem empfangen kann. Weiterhin dargestellt ist eine drahtgebundene Netzwerkschnittstelle LAN, mittels welcher Personalcomputer oder Drucker über eine Kabelverbindung mit dem Telekommunikationsnetzwerkknoten 100 verbunden werden können. Demselben Zweck kann auch eine serielle Schnittstelle USB dienen. Ebenso können Zubehörteile wie Scanner, Kameras, Mobiltelefone oder Drucker über eine Nahbereichs-Funkschnittstelle Bluetooth mit dem Telekommunikationsnetzwerkknoten verbunden werden.

Um die Kommunikation nicht nur den Geräten innerhalb des Hauses bzw. des Büros zu ermöglichen, kann der Telekommunikationsnetzwerkknoten 100 daneben weitere Kommunikationseinrichtungen aufweisen, mittels welchen die Kommunikation mit öffentlichen Netzwerken ermöglicht wird. Beispielhaft ist in Fig. 1 ein DSL-Modem xDSL dargestellt. Der Begriff "xDSL" steht heute z.B. für "ADSL" oder "VDSL". Zukünftig können natürlich Folgetechniken hinzukommen, die ebenfalls mit "xDSL" gemeint sind. Demselben Zweck können auch externe analoge Telefonanschlüsse POTS oder externe digitale Telefonanschlüsse ISDN dienen. Um über die letztgenannten Schnittstellen nicht lediglich Computerdaten auszutauschen, sondern auch Sprachkommunikation zu ermöglichen, kann der Telekommunikationsnetzwerkknoten 100 weiterhin interne Telefonanschlüsse FXS aufweisen, an welchen drahtgebundene Telefone anschließbar sind. Daneben kann zur Verwendung mit Schnurlostelefonen eine entsprechende Schnittstelle DECT vorgesehen sein. Auf diese Weise ermöglicht der Telekommunikationsnetzwerkknoten 100 aufgrund der Vielzahl vorhandener Kommunikationseinrichtungen 110 eine umfassende Vernetzung von Sprach-, Fax- und Datendiensten innerhalb des Büros beziehungsweise des Wohnhauses.

Um Daten zwischen den Kommunikationseinrichtungen 110 austauschen zu können, steht ein Datenbus 140 zur Verfügung. Über diesen Datenbus können beispielsweise auch Aktivitätsdaten, welche den Benutzungszustand einzelner Kommunikationseinrichtungen 110 betreffen, zur Einrichtung zur Aktivitätsanalyse EEA übertragen werden. Ebenso können über den Datenbus 140 auch Schaltbefehle von einer Schalteinrichtung 180 übertragen werden, welche eine oder mehrere Kommunikationseinrichtungen 110 betreffen.

Weiterhin weist der Telekommunikationsnetzwerkknoten 100 einen Auswahlspeicher 120 auf Der Auswahlspeicher 120 ist in Form einer Datenbank organisiert, wobei jeder Kommunikationseinrichtung 110 ein entsprechendes Datenbankfeld 160 zugeordnet ist. Das Datenbankfeld 160 kann insbesondere dazu vorgesehen sein, Konfigurationsdaten der jeweiligen Kommunikationseinrichtung 110 aufzunehmen. Gemäß dem vorliegend beschriebenen Ausführungsbeispiel nimmt das Datenbankfeld 160 darüber hinaus Aktivitätsdaten auf, d.h. die Kommunikationseinrichtung 110 trägt ihren Aktivitätszustand über den Datenpfad 150 in das zugeordnete Datenbankfeld 160 ein. Dies kann im einfachsten Falle ein Ein-Bit-Wert sein, welcher eine Benutzung während eines vorgebbaren Zeitraumes anzeigt. Fakultativ können auch größere Datenbereiche vorgesehen sein, in welchen detaillierte Benutzungsprofile für eine Vielzahl von Zeiträumen abgelegt werden können.

Gemäß einer anderen Ausführungsform der Erfindung kann auch vorgesehen sein, dass die Aktivitätsdaten von den jeweiligen Kommunikationseinrichtungen 110 über den Datenbus 140 an die Einrichtung zur Aktivitätsanalyse EEA gesendet werden. Von dort aus kann die Einrichtung zur Aktivitätsanalyse EEA über den Datenpfad 145 auf das zugeordnete Datenbankfeld 160 des Auswahlspeichers 120 zugreifen. Dabei kann die Einrichtung zur Aktivitätsanalyse EEA mit einem Zeitgeber 130 verbunden sein, um die erfassten Aktivitätsdaten mit einer Zeitinformation zu versehen und zusammen mit der Zeitinformation im Auswahlspeicher 120 abzulegen.

Nachdem eine hinreichend lange Zeitdauer Aktivitätsdaten gesammelt und im Auswahlspeicher 120 abgelegt wurden, kann über die Einrichtung zur Aktivitätsanalyse EEA mittels einer Einrichtung 170 zur Erzeugung eines Schaltprogramms aus den gespeicherten Aktivitätsdaten ein Schaltprogramm zur Ansteuerung der Schalteinrichtung 180 erzeugt werden. Dazu wurden Aktivitätstaten bevorzugt zwischen einem Tag und vier Wochen, besonders bevorzugt etwa eine Woche gesammelt und im Auswahlspeicher 120 abgelegt.

Die Einrichtung 170 zur Erstellung eines Schaltprogramms kann beispielsweise dazu ausgelegt sein, Regelmäßigkeiten in den gespeicherten Aktivitätsdaten zu erkennen. Dadurch wird beispielsweise ermöglicht, eine bestimmte Kommunikationseinrichtung 110 an bestimmten Wochentagen oder zu bestimmten Tageszeiten abzuschalten. Weiterhin kann die Einrichtung 170 dazu eingerichtet sein, Kommunikationseinrichtungen 110 zu erkennen, welche über den gesamten Beobachtungszeitraum nicht benutzt wurden. Schließlich kann die Einrichtung 170 dazu ausgebildet sein, unscharf begrenzte bzw. wechselnde Aktivitätszeiträume so zusammen zu fügen, dass auch bei einem Aktivitätszeitraum, dessen Beginn und Ende nur ungefähr bekannt ist, eine hohe Verfügbarkeit der Kommunikationseinrichtung gegen die maximale Energieersparnis abgewogen wird. Hierzu kann beispielsweise ein neuronales Netz oder Fuzzy-Logik verwendet werden.

Nachdem durch die Einrichtung 170 automatisiert ein mögliches Schaltprogramm für die Schalteinrichtung 180 erzeugt wurde, kann dies in einem fakultativen Verfahrensschritt durch die Einrichtung 170 über eine Benutzerschnittstelle dem Benutzer angezeigt werden, so dass dieser Änderungen am automatisiert erstellten Schaltprogramm vornehmen kann. Weiterhin kann die Einrichtung 170 dazu ausgebildet sein, dem Benutzer über eine Benutzerschnittstelle die Deaktivierung bestimmter Kommunikationseinrichtungen 110 anzuzeigen. Als Benutzerschnittstelle kann beispielsweise eine HTML-Seite verwendet werden, welche mittels eines Web-Browsers anzeigbar ist oder Leuchtdioden, welche den Aktivierungs- bzw. Deaktivierungszustand einer Kommunikationseinrichtung anzeigen.

Das auf diese Weise erstellte Schaltprogramm wird schließlich zur Schalteinrichtung 180 geleitet, welche ebenfalls einen Anschluss an die Einrichtung zur Zeiterfassung 130 aufweist, um das Schaltprogramm präzise umsetzen zu können.

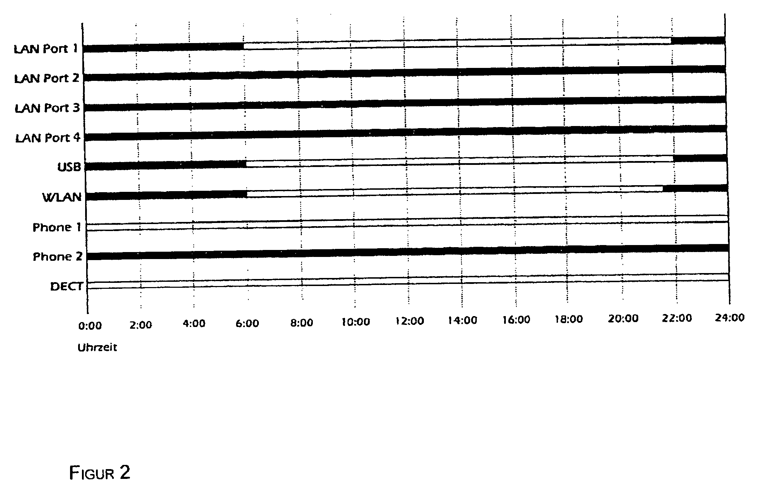

Fig. 2 zeigt beispielhaft Aktivitätsdaten, wie sie mit der Einrichtung zur Aktivitätsanalyse EEA erfasst werden könnten. Fig. 2 zeigt entlang der X-Achse die Tageszeit eines einzelnen Kalendertages von 0 bis 24 Uhr. Darüber sind in neun Zeilen die Aktivitäten von verschiedenen Kommunikationseinrichtungen 110 dargestellt. Exemplarisch sind vier drahtgebundene Netzwerkschnittstellen LAN Port 1, LAN Port 2, LAN Port 3 und LAN Port 4 darstellt. Weiterhin ist beispielhaft die Aktivität einer seriellen Schnittstelle USB sowie einer drahtlosen Netzwerkschnittstelle WLAN dargestellt. Weiterhin soll der beispielhaft dargestellte Telekommunikationsnetzwerkknoten 100 zwei drahtgebundene Schnittstellen für Telefone Phone 1 und Phone 2 aufweisen sowie eine drahtlose Telefonschnittelle DECT.

In Fig. 2 sind Zeiten der Inaktivität in schwarz dargestellt. Zeiten, in welchen die entsprechende Kommunikationseinrichtung 110 verwendet wird, sind grau dargestellt. Aus Fig. 2 ist somit ersichtlich, dass eine der Telefonschnittstellen Phone 2 sowie drei Netzwerkschnittstellen LAN Port2, LAN Port 3 und LAN Port 4 ganztätig nicht benutzt wurden. Im Gegensatz dazu wurde eine Telefonschnittselle Phone 1 sowie das Schnurlostelefon an der Schnittstelle DECT ganztätig benutzt. Die der elektronischen Datenverarbeitung vorbehaltenen Schnittstellen LAN Port 1, WLAN und USB wurden tagsüber zwischen 6 und 22 Uhr benutzt, wobei die drahtlose Netzwerkverbindung WLAN bereits geringfügig früher außer Betrieb genommen wurde.

In gleicher Weise, wie in Fig. 2. beispielhaft für einen Tag dargestellt, können Aktivitätsdaten auch für eine Mehrzahl von Geräten über mehrere Wochen oder Monate aufgenommen werden. Schließlich kann aus den im Auswahlspeicher 120 abgelegten Aktivitätsdaten mittels der Einrichtung 170 ein Schaltprogramm erzeugt werden. Im vorliegenden Beispiel könnte dieses Schaltprogramm vorsehen, die drei Netzwerkschnittstellen LAN Port 2, LAN Port 3 und LAN Port 4 zur Energieersparnis dauerhaft abzuschalten. Ebenso könnte mit der Telefonschnittstelle Phone 2 vorgegangen werden.

Die ständige Verfügbarkeit bzw. die gewünschte permanente Erreichbarkeit über das Schnurlostelefon und das weitere drahtgebundene Telefon verhindern eine vollständige Abschaltung des Telekommunikationsnetzwerkknotens 100. Jedoch können die für EDV-Nutzung vorgesehenen Schnittstellen LAN Port1, USB und WLAN während der Nachtstunden abgeschaltet werden, um auf diese Weise Energie einzusparen. Im Falle der Funkschnittstelle WLAN ergibt sich dabei zusätzlich der Vorteil, dass in den Nachtstunden die Belastung durch Elektrosmog vermindert wird.

Die internen Telefonanschlüsse FXS und die externen Telefonanschlüsse FXO können grundsätzlich einer der drei Technologien ISDN, PON oder POTS entsprechen.

Dem Fachmann ist selbstverständlich geläufig, dass die Erfindung nicht auf die dargestellten Ausführungsbeispiele beschränkt ist. Vielmehr können bei der Umsetzung der Erfindung Modifikationen und Änderungen vorgenommen werden, ohne die Erfindung an sich wesentlich zu verändern. Die vorstehende Beschreibung ist daher nicht als beschränkend, sondern als erläuternd anzusehen. Die vorstehende Beschreibung hat die Erfindung anhand von funktionellen Einheiten beschrieben. Der Fachmann wird dabei vorsehen, solche funktionelle Einheiten wahlweise in Hardware oder als Software zu verwirklichen. Auch sind die genannten Kommunikationseinrichtungen 110 lediglich beispielhaft zu sehen. Der Fachmann wird wahlweise weitere, nicht genannte Kommunikationseinrichtungen 110 vorsehen. Ebenso können hier aufgeführte Kommunikationseinrichtungen 110 in einzelnen Ausführungsformen der Erfindung entfallen.

## Patentansprüche

1. Telekommunikationsnetzwerkknoten (100), welcher folgende Elemente enthält:
- wenigstens zwei Kommunikationseinrichtungen (110),
- eine Einrichtung zur Aktivitätsanalyse (EEA), der wenigstens zwei Kommunikationseinrichtungen (110) zugeordnet sind,
- einen Auswahlspeicher (120) zur Speicherung von Aktivitätsdaten (160) der wenigstens zwei Kommunikationseinrichtungen (110), und
- eine Schalteinrichtung (180), welche dazu eingerichtet ist, wenigstens eine Kommunikationseinrichtung (110) wenigstens zeitweise abzuschalten,
**dadurch gekennzeichnet, dass** die Einrichtung zur Aktivitätsanalyse (EEA) mit dem Auswahlspeicher (120) derart verbunden ist, dass Aktivitätsdaten (160) der wenigstens zwei Kommunikationseinrichtungen (110) in dem Auswahlspeicher (120) ablegbar sind und die Schalteinrichtung (180) mit dem Auswahlspeicher (120) verbunden ist, wobei die Schalteinrichtung dazu eingerichtet ist, wenigstens eine Kommunikationseinrichtung (110) gemäß im Auswahlspeicher abgelegter Aktivitätsdaten (160) automatisiert zu schalten.

2. Telekommunikationsnetzwerkknoten (100) nach Anspruch 1, **dadurch gekennzeichnet, dass** die Kommunikationseinrichtungen (110) und/oder die Schalteinrichtung (180) und/oder die Einrichtung zur Aktivitätsanalyse (EEA) mittels wenigstens eines Busses (140) miteinander verbunden sind, welcher dazu eingerichtet ist, Schaltbefehle und/oder Aktivitätsdaten zu übertragen.

3. Telekommunikationsnetzwerkknoten (100) nach Anspruch 1 oder 2, **dadurch gekennzeichnet, dass** die Einrichtung zur Aktivitätsanalyse (EEA) dazu eigerichtet ist, eine Aktivitätsanalyse der wenigstens zwei zugeordneten Kommunikationseinrichtungen (110) mittels einer Überwachung der Signalleitungen und/oder elektrische Primärenergieaufnahme der Kommunikationseinrichtungen (110) durchzuführen.

4. Telekommunikationsnetzwerkknoten (100) nach Anspruch 1 oder 2, **dadurch gekennzeichnet, dass** die Schalteinrichtung dazu eingerichtet ist, Schaltbefehle eines Benutzers betreffend wenigstens eine Kommunikationseinrichtung (110) entgegen zu nehmen.

5. Telekommunikationsnetzwerkknoten (100) nach einem der Ansprüche 1 bis 4, weiterhin enthaltend eine Einrichtung zur Zeiterfassung (130), mit welcher die Einrichtung zur Aktivitätsanalyse und/oder die Schalteinrichtung steuerbar ist,

6. Telekommunikationsnetzwerkknoten (100) nach einem der Ansprüche 1 bis 5, **dadurch gekennzeichnet, dass** die wenigstens zwei Kommunikationseinrichtungen (110) ausgewählt sind aus einem DSL-Modem (xDSL) und/oder einem analogen Modem und/oder einer drahtlosen Netzwerkschnittstelle (WLAN) und/oder einer kabelgebundenen Netzwerkschnittstelle (LAN) und/oder einem internen Telefonanschluss (FXS) und/oder einem externen Telefonanschluss (FXO) und/oder einer DECT-Schnittstelle (DECT) und/oder einer USB-Schnittstelle (USB) und/oder einer drahtlosen Nahbereichs-Funkschnittstelle (Bluetooth).

7. Telekommunikationsnetzwerkknoten (100) nach einem der Ansprüche 1 bis 6, **dadurch gekennzeichnet, dass** weiterhin eine Einrichtung (170) zur Erstellung eines Benutzerprofils vorhanden ist, mit welcher aus den Aktivitätsdaten ein Schaltprogramm zur Ansteuerung der Schalteinrichtung (180) automatisiert erstellbar ist.

8. Verfahren zum Betrieb eines Telekommunikationsnetzwerkknotens (100), welcher wenigstens zwei Kommunikationseinrichtungen (110) enthält, ausgewählt aus einem DSL-Modem (xDSL), einem analogen Modem, einer drahtlosen Netzwerkschnittstelle (WLAN), einer kabelgebundenen Netzwerkschnittstelle (LAN), einem internen Telefonanschluss (FXS), einem externen Telefonanschluss (FXO), einer DECT-Schnittstelle (DECT), einer USB-Schnittstelle (USB) und/oder einer drahtlosen Nahbereichs-Funkschnittstelle (Bluetooth), bei welchem in einem ersten Schritt automatisiert eine Aktivitätsanalyse der wenigstens zwei Kommunikationseinrichtungen (110) durchgeführt wird und die Aktivitätsdaten (160) für jede Kommunikationseinrichtung (110) in einem Auswahlspeicher (120) abgelegt werden und in einem zweiten Schritt wenigstens eine Kommunikationseinrichtung (110) in Abhängigkeit der in dem Auswahlspeicher (120) abgelegten Aktivitätsdaten (160) wenigstens zeitweise abgeschaltet wird.

9. Verfahren nach Anspruch 8, **dadurch gekennzeichnet, dass** die Aktivitätsanalyse über einen Zeitraum von etwa 1 Tag bis etwa 21 Tage durchgeführt wird.

10. Verfahren nach Anspruch 8, **dadurch gekennzeichnet, dass** die Aktivitätsanalyse über cinen. Zeitraum von etwa 6 bis etwa 8 Tagen durchgeführt wird.

11. Verfahren nach einem der Ansprüche 8 bis 11, **dadurch gekennzeichnet, dass** zur Aktivitätsanalyse die Signalleitungen und/oder die elektrische Primärenergieaufnahme einer jeden Kommunikationseinrichtung (110) überwacht werden.

12. Verfahren nach einem der Ansprüche 8 bis 12, **dadurch gekennzeichnet, dass** die Aktivitätsanalyse erneut durchgeführt wird, wenn eine abgeschaltete Kommunikationseinrichtung (110) durch einen Benutzereingriff wieder eingeschaltet wird.

13. Verfahren nach einem der Ansprüche 8 bis 13, **dadurch gekennzeichnet, dass** aus den in der Aktivitätsanalyse gespeicherten Aktivitätsdaten (160) automatisiert ein Schaltprogramm erzeugt wird, um die Schaltzeiten für wenigstens eine Kommunikationseinrichtung (110) zu bestimmen.

14. Verfahren nach Anspruch 14, **dadurch gekennzeichnet, dass** die Schaltzeiten durch einen Benutzereingriff modifizierbar sind.

15. Verfahren nach einem der Ansprüche 8 bis 14, **dadurch gekennzeichnet, dass** das Abschalten einer Kommunikationseinrichtung dem Benutzer angezeigt wird.

## Claims

1. A telecommunications network node (100), comprising the following elements:
- at least two communication devices (110);
- an activity analysis device (EEA), which has at least two communication devices (110) associated therewith;
- a selection memory (120) for storing activity data (160) of the at least two communications devices (110); and
- a switching device (180), which is configured to deactivate at least one communication device (110) at least intermittently,
**characterized in that** the activity analysis device (EEA) is connected to the selection memory (120) such that activity data (160) of the at least two communication devices (110) can be stored in the selection memory (120), and the switching device (180) is connected to the selection memory (120), the switching device being configured to switch at least one communication device (110) automatically in accordance with activity data (160) stored in the selection memory.

2. The telecommunications network node (100) according to claim 1, **characterized in that** the communication devices (110) and/or the switching device (180) and/or the activity analysis device (EEA) are connected to each other by way of at least one bus (140), which is configured to transmit switch commands and/or activity data.

3. The telecommunications network node (100) according to claim 1 or 2, **characterized in that** the activity analysis device (EEA) is configured to carry out an activity analysis of the at least two associated communication devices (110) by way of monitoring the signaling lines and/or electrical primary energy consumption of the communication devices (110).

4. The telecommunications network node (100) according to claim 1 or 2, **characterized in that** the switching device is configured to receive switch commands of a user relating to at least one communication device (110).

5. The telecommunications network node (100) according to any one of claims 1 to 4, furthermore comprising a time recording device (130), which can be used to control the activity analysis device and/or the switching device.

6. The telecommunications network node (100) according to any one of claims 1 to 5, **characterized in that** the at least two communication devices (110) are selected from a DSL modem (xDSL) and/or an analog modem and/or a wireless network interface (WLAN) and/or a wired network interface (LAN) and/or an internal telephone connection (FXS) and/or an external telephone connection (FXO) and/or a DECT interface (DECT) and/or a USB interface (USB) and/or a wireless near-range radio interface (Bluetooth).

7. The telecommunications network node (100) according to any one of claims 1 to 6, **characterized in that** furthermore a device (170) for creating a user profile is present, which can be used to automatically create a switching program for actuating the switching device (180) from the activity data.

8. A method for operating a telecommunications network node (100) comprising at least two communication devices (110) selected from a DSL modem (xDSL) an analog modem, a wireless network interface (WLAN), a wired network interface (LAN), an internal telephone connection (FXS), an external telephone connection (FXO), a DECT interface (DECT), a USB interface (USB) and/or a wireless near-range radio interface (Bluetooth), in which, in a first step, an activity analysis of the at least two communication devices (110) is automatically carried out, and the activity data (160) for each communication device (110) is stored in a selection memory (120) and, in a second step, at least one communication device (110) is deactivated at least intermittently as a function of the activity data (160) stored in the selection memory (120).

9. The method according to claim 8, **characterized in that** the activity analysis is carried out over a time period of approximately 1 day to approximately 21 days.

10. The method according to claim 8, **characterized in that** the activity analysis is carried out over a time period of approximately 6 to approximately 8 days.

11. The method according to any one of claims 8 to 11, **characterized in that** the signaling lines and/or the electrical primary energy consumption of each communication device (110) are monitored for the activity analysis.

12. The method according to any one of claims 8 to 12, **characterized in that** the activity analysis is carried out again when a deactivated communication device (110) is activated again by a user intervention.

13. The method according to any one of claims 8 to 13, **characterized in that** a switching program is automatically generated from the activity data (160) stored in the activity analysis so as to determine the switching times for at least one communication devices (110).

14. The method according to claim 14, **characterized in that** the switching times can be modified by a user intervention.

15. The method according to any one of the preceding claims 8 to 14, **characterized in that** the deactivation of a communication device is indicated to the user.

## Revendications

1. Noeud de réseau de télécommunication (100), lequel contient les éléments suivants :
- au moins deux dispositifs de communication (110),
- un dispositif destiné à l'analyse d'activité (EEA), qui est associé aux au moins deux dispositifs de communication (110),
- une mémoire de sélection (120) pour le stockage de données d'activité (160) des aux moins deux dispositifs de communication (110), et
- un dispositif de commutation (180) lequel est mis en place pour couper au moins par moments au moins un dispositif de communication (110),
**caractérisé en ce que** le dispositif destiné à l'analyse d'activité (EEA) est relié avec la mémoire de sélection (120) de telle manière que des données d'activité (160) des au moins deux dispositifs de communication (110) peuvent être déposées dans la mémoire de sélection (120), et le dispositif de commutation (180) est relié avec la mémoire de sélection (120), où le dispositif de commutation est conçu pour commuter automatiquement au moins un dispositif de communication (110) selon des données d'activité (160) déposées dans la mémoire de sélection.

2. Noeud de réseau de télécommunication (100) selon la revendication 1, **caractérisé en ce que** les dispositifs de communication (110), et/ou le dispositif de commutation (110), et/ou le dispositif destiné à l'analyse d'activité (EEA), sont reliés ensemble au moyen d'au moins un bus (140), lequel est mis en place pour transmettre des commandes de commutation et/ou des données d'activité.

3. Noeud de réseau de télécommunication (100) selon la revendication 1, ou 2, **caractérisé en ce que** le dispositif destiné à l'analyse d'activité (EEA) est conçu pour exécuter une analyse d'activité des au moins deux dispositifs de communication (110) associés au moyen d'une surveillance des lignes de signaux et/ou de la consommation d'énergie primaire des dispositifs de communication (110).

4. Noeud de réseau de télécommunication (100) selon la revendication 1, ou 2, **caractérisé en ce que** le dispositif de commutation est mis en place pour répondre aux commandes de commutation d'un utilisateur en ce qui concerne au moins un dispositif de communication (110).

5. Noeud de réseau de télécommunication (100) selon l'une des revendications 1 à 4, contenant en outre un dispositif destiné à la comptabilisation du temps (130), avec lequel le dispositif destiné à l'analyse d'activité et/ou le dispositif de commutation peuvent être commandés.

6. Noeud de réseau de télécommunication (100) selon l'une des revendications 1 à 5, **caractérisé en ce que** les au moins deux dispositifs de communication (110) sont choisis parmi un modem DSL (xDSL), et/ou un modem analogique, et/ou une interface de réseau sans fil (WLAN), et/ou une interface de réseau reliée par câble (LAN), et/ou une connexion téléphonique interne (FXS), et/ou une connexion téléphonique externe (FXO), et/ou une interface DECT (DECT), et/ou une interface USB (USB), et/ou une interface radio de courte portée sans fil (Bluetooth).

7. Noeud de réseau de télécommunication (100) selon l'une des revendications 1 à 6, **caractérisé en ce qu'**en outre un dispositif (170) est présent pour l'établissement d'un profil d'utilisateur, avec lequel un programme de commutation peut être mis en place automatiquement pour le démarrage du dispositif de commutation (180).

8. Procédé destiné au fonctionnement d'un noeud de réseau de télécommunication (100), lequel contient au moins deux dispositifs de communication (110), choisis parmi un modem DSL (xDSL), et/ou un modem analogique, et/ou une interface de réseau sans fil (WLAN), et/ou une interface de réseau reliée par câble (LAN), et/ou une connexion téléphonique interne (FXS), et/ou une connexion téléphonique externe (FXO), et/ou une interface DECT (DECT), et/ou une interface USB (USB), et/ou une interface radio de courte portée sans fil (Bluetooth), chez lequel, dans une première étape, une analyse d'activité des au moins deux dispositifs de commutation (110) est exécutée automatiquement et les données d'activité (160) pour chaque dispositif de communication (110) sont déposées dans une mémoire de sélection (120) et dans une deuxième étape, au moins un dispositif de communication (110) est coupé au moins par moments en fonction des données d'activité (160) déposées dans la mémoire de sélection (120).

9. Procédé selon la revendication 8, **caractérisé en ce que** l'analyse d'activité est exécutée durant un espace de temps d'environ 1 jour à environ 21 jours.

10. Procédé selon la revendication 8, **caractérisé en ce que** l'analyse d'activité est exécutée durant un espace de temps d'environ 6 jours à environ 8 jours.

11. Procédé selon l'une des revendications 8 à 11, **caractérisé en ce que**, pour l'analyse d'activité, les lignes de signaux et/ou la consommation d'énergie primaire de chacun des dispositifs de communication (110) sont surveillés.

12. Procédé selon l'une des revendications 8 à 12, **caractérisé en ce que** l'analyse d'activité est à nouveau exécutée lorsqu'un dispositif de communication (110) est de nouveau mis en marche par une intervention d'un utilisateur.

13. Procédé selon l'une des revendications 8 à 13, **caractérisé en ce qu'**un programme de commutation est automatiquement généré à partir des données d'activité (160) stockées dans l'analyse de mémoire afin de déterminer les durées de connexion pour au moins un dispositif de communication (110).

14. Procédé selon la revendication 14, **caractérisé en ce que** les durées de connexion peuvent être modifiées par une intervention d'un utilisateur.

15. Procédé selon l'une des revendications 8 à 14, **caractérisé en ce que** la coupure d'un dispositif de communication est indiquée à l'utilisateur.
